# EUROPEAN PATENT APPLICATION

(11) **EP 4 660 173 A1**
(43) Date of publication of application: **10.12.2025**
(21) Application number: 24179736.4
(22) Date of filing: 03.06.2024
(51) Int. Cl.: C05F 5/00, C05F 17/20, C05F 17/70, C05F 17/921, C05F 17/943

(54) **A PROCESS AND A SYSTEM FOR CONTINOUS PRODUCTION OF ORGANIC FERTILISER FROM FRUIT POMACE AND AN ORGANIC FERTILISER OBTAINED WITH SAID PROCESS**

(71) Applicant: GreenGrow d.o.o., 6276 Pobegi (SI)
(72) Inventor: FERFOLJA, Alfonz, 6310 Izola (SI)
(74) Representative: Patentni Biro AF d.o.o.

(57) **Abstract**

The present invention belongs to the field of fertilizers, particularly organic fertilizers, and to the field of processes for preparation of fertilizers, which comprise biological or biochemical steps, such as composting or fermentation. The invention relates to a process and a system for continuous production of organic fertilizer and organic fertilizer produced with said process.

The process comprises preparing or providing a fermentation agent, which comprises inoculation of fruit pomace with a microbial community comprising at least fungi, actinomycetes, thermophilic microorganisms and acidophilic bacteria, and preparing a fertilizer by mixing the fermentation agent and the raw material. In the process, acidophilic bacteria are sequentially activated, which break down fats and proteins in the input raw material, then the decomposition of cellulose and the activation of thermophilic microorganisms occur due to the increase in temperature. This is followed by the mineralization and formation of humates from the humic acids formed in the previous steps, the optional addition of nitrogen, phosphorus, and/or potassium to form organic-mineral complexes, and a drop in temperature to room temperature or ambient temperature, which is a sign that the fertilizer preparation process is finished. Raw material is added at the first end of the fermentation shaft, and with mixing the entire mass moves due to mixing towards the second end of the fermentation shaft, where the final fertilizer with humates is present, while at the first end fresh raw materials and fermentation agent can be added.

## Description

### Field of the invention

The present invention belongs to the field of fertilizers, particularly organic fertilizers, and to the field of processes for preparation of fertilizers, which comprise biological or biochemical steps, such as composting or fermentation. The invention relates to a process and a system for continuous production of organic fertilizer and organic fertilizer produced with said process.

### Background of the invention and the technical problem

Fertilization is a necessary process in the cultivation of plants, regardless of whether it is a large-scale cultivation or just for home use. Namely, the plants draw nutrients from the soil, and without returning the nutrients to the soil, they are depleted and thus plant growth and cultivation is hampered. Proper fertilization and maintenance of soil fertility is therefore essential, as the plants need humus, as well as microbial flora with countless trace elements. Organic fertilizers, such as manure and compost, as well as artificial or mineral fertilizers are used for this purpose. Excessive fertilization with artificial fertilizers causes great damage, especially if there is no judicious and controlled use of nitrogen fertilizers.

Many different processes for obtaining organic fertilizers are known, as well as many raw materials for use in these processes. Wastes that contain nitrogen in a pulpy form can be used, such as animal excrement from all production farms, sludge from municipal septic systems if no toxic industrial waste water flows into the sewage treatment plant, finely chopped bark, all types of sawdust, short-cut straw, cellulosic waste screened from municipal waste, etc.

The processes are mostly batch-type processes, which means that the raw materials are mixed and left until the process is complete, wherein nothing is added or taken away during the process, while only air or gas can be added and mixed. Fertilizer cannot be removed in intermediate stages, and possible process accelerators cannot be used in subsequent batches either. The problem with such procedures is the long duration, the lack of control over the conditions, as well as a large number of suitable systems for the preparation of fertilizer, if one wants to ensure fairly continuous availability of fertilizer.

The aim of the present invention is design of a process for production of fertilizer, which will allow continuous production that will be more economical, faster and controlled.

### Prior art

Patent application FR2357505 describes preparation of a dry organic fertilizer comprising mixing of guano or excrement of domestic or wild birds, which is ground together with dried grape pomace from which the oil has been previously removed. The whole process is carried out in batch mode inside customized mixing vessels.

Patent application CN1468828Adiscloses a process for preparation of organic fertilizer by using fruit pomace, lime, enzyme complexes, such as cellulase, hemicellulase and pectase, as well as water, wherein the whole process is performed in a fermentation vessel with temperature control. In the first step of the process the temperature is rising, then it is maintained, while later the temperature drops.

Patent RU2409537 relates to a method wherein excrement of caged birds are used in preparation of compost. A microbial community is added. The process is performed in piles for 30 to 60 days.

Patent CA1313772C discloses the use of composted livestock and agricultural residues in combination with denatured fungal mycelium used in the industrial production of metabolites. The mycelium is sterilized after cultivation is complete, inactivating the cells, but still has enough other nutrients for the plants to use.

Patent application GB1260554A relates to a method for preparation of concentrated humic substances, wherein a series of fermentations with different microorganisms and under different conditions are performed. The method is performed in a fermentation vessel, which has doors or openings for ensuring airing.

The so-called rapid composting procedures are partly continuous processes, after which fresh waste is added to the top of the tower of decomposing waste for processing in a multi-stage cellular decomposition in the absence of oxygen, followed by downward movement. These processes also take several months, and at the same time include anaerobic digestion, during which unpleasant odours spread, which is not suitable for the environment. Document DE2544960 relates to the preparation of fertilizer from biological waste in a fermentation tower, where anhydrous MgSO₄ or CaO is added under pressure and at elevated temperature. This process does not allow for a continuous process, as it takes place in batch mode inside the fermentation vessels.

### Description of the solution to the technical problem

The aim of the invention is provision of a continuous process for preparation of fertilizers, which will address the problems of known solutions. The technical problem is solved as defined in the independent claim, wherein the preferred embodiments are defined in dependent claims. None of the above-mentioned solutions disclose the same process for preparation of fertilizers.

The process for continuous production of organic fertilizer according to the invention comprises two steps:
a) optionally preparation of a fermentation agent comprising a mixture of fruit pomace and a microbial consortium comprising at least fungi, actinomycetes, thermophilic microorganisms and acidophilic bacteria, or providing the fermentation agent comprising a mixture of fruit pomace and a microbial consortium comprising at least fungi, actinomycetes, thermophilic microorganisms and acidophilic bacteria,
b) preparing the organic fertilizer by mixing the fermentation agent and raw materials, wherein this step comprises the following sub-steps:
   i. adding at least one raw material and the fermentation agent in ratio from 2:1 to 5:1, preferably 3:1, into the fermentation shaft, wherein optionally any other additional material may be added, following by mixing of materials and fermentation agent in the fermentation shaft, wherein said shaft is a horizontal shaft with preferred depth between 1.5 and 2 m, preferred length up to 60 m and preferred width up to 6 m,
   ii. activation of acidophilic bacteria in the fermentation agent, when the fat and then proteins in the raw material are beginning to be decomposed, and an increase in temperature to approximately 40 C°, wherein moisture up to 65% is maintained, wherein this phase lasts for 7 to 10 days with mixing every 1 to 3 days, wherein ammonium concentration may be followed and if necessary, materials with carbon can be added, such as fresh fermentation agent or additional raw material, wherein a C/N ratio around 1/30 is preferred,
   iii. decomposition of cellulose, wherein increase in temperature above 60 °C is detected, preferably above 70 °C, due to inactivation of acidophilic bacterial as saccharides from raw materials have been used as well as due to activation of thermophilic microorganisms due to increased temperature,
   iv. mixing every 1 to 3 days, so that addition of oxygen during mixing maintains high temperature around 70-80 °C for at least one week, preferably for 20 to 30 days in the part of fermentation shaft where cellulose is decomposed, when all raw materials are converted into fertilizer, wherein mixing also ensures that the mass is moved along the fermentation shaft, that novel reaction nuclei are formed, which reduces duration of fermentation, as the materials are processed more quickly, and for adding oxygen which prevent anaerobic processes in the mass present in the fermentation shaft,
   v. mineralization and formation of humates from humic acids formed in previous phases, wherein optionally nitrogen, phosphorus and/or potassium for formation of organic-mineral complexes are added, wherein in this phase the temperature decreases under 40 °C and moisture content is kept at 30 to 40%,
   vi. temperature decrease to the room temperature level or the environmental temperature, which indicates that the process of the production of fertilizer is finished,
wherein addition of raw materials or a mixture of raw materials and fermentation agent is done at the first end of the fermentation shaft, and wherein due to mixing the entire mass is moving towards the second end of the fermentation shaft, where final fertilizer with humates is present, and fresh raw materials and fermentation agent may be added at the first end. The amount of added fresh raw materials and fermentation agent is the same as the amount of fertilizer packaged from the second end of the fermentation shaft.

Thus, the process is entirely continuous and is performed in the fermentation shaft according to a conveyor-belt principle, wherein movement of the material is ensured with the mixing device, which is arranged to mix matter along the entire depth of the fermentation shaft and for moving along the entire length of the fermentation shaft.

After preparation of the fertilizer or in the intermediate phases of the process addition and mixing with additional components is possible, wherein said additional components may be used to adjust the fertilizer to specific plants or soils. Particularly, this is valid for step v), in which different mineral additives for providing nitrogen, phosphorus and/or potassium may be added, thus enabling formation of organic-mineral complexes. In case the latter are present in the fertilizer, the use of mineral fertilizer is not required or its consumption is significantly reduced, which positively impacts the environment.

The last step is followed by packaging into a suitable packaging in required amounts.

An advantage of the described process is in that it can be controlled and adjusted in each phase separately, wherein it is also possible to correct the process in case one phase is found to be inactive or not suitably carried out, for example due to excessively high moisture, too low temperature and similar. For example, in case of too high moisture, components that bind water, such as wood chips, can be added and mixed. In case of too low temperature, which indicates inactivity or hampered activity of the fermentation agent, the latter may be added again and thus the beginning of the process is re-initiated. A further advantage of said process is also that it allows addition of further components, so that fertilizers adapted for various needs of gardening and agriculture are obtained.

In the process according to the invention the following raw materials may be used:
- for the fermentation agent fruit pomace, particularly grape pomace, and a microbial culture comprising at least fungi, actinomycetes, thermophilic microorganisms and acidophilic bacteria, wherein for maintenance of liveness of the fermentation agent fruit pomace is regularly added and mixed, so that the microbial consortium is equally distributed over the entire volume and can thus multiply and grow,
- as raw material manure of from laying hens, manure from chicken farms or manure from pig farms, and
- optionally additional raw materials such as sludge from sewage treatment plants that do not contain heavy metals or hazardous substances, residues from biogas plants, products from municipal composting plants, olive pomace, pumpkin pomace, hop pomace and similar residues or waste.

For the fermentation agent fruit pomace is used due to sugar contents, which the microbial consortium may use as food for multiplication. Fruit pomace represent a waste in food industry; therefore, the invention allows circular economy and reduction of waste.

The system for carrying out the process according to the invention comprises:
- depot of incoming raw material for supplying the process according to the invention, preferably for three months, as the hen farms are usually emptied every three months,
- pomace depot, where the process for preparation of fermentation agent is performed,
- at least one building with at least one fermentation shaft or channel for performing the second step of the process as described above, wherein the building comprises:
   ∘ at least one fermentation shaft, which has a first end and a second end, wherein fresh manure and the fermentation agent is added to the first end and the prepared fertilizer is packaged at the second end,
   ∘ a mixing device arranged to mix the contents in at least one fermentation shaft,
   ∘ measuring equipment comprising at least:
      ▪ at least one pH measuring device,
      ▪ at least one device for measuring ammonia concentration,
      ▪ at least one device for measuring temperature, and
      ▪ at least one device for measuring humidity,
   wherein the measuring equipment is preferably hand held and are used in different phases of the process, wherein measurements are performed 10 to 15 cm below the upper surface of the material in the fermentation shaft.

Ammonium is released in approximately the first sixth to the first quarter, usually in the first fifth of the fermentation shaft, therefore ammonium concentration is measured in this part of the fermentation shaft manually with a probe. Formation of ammonium is a sign of conversion of proteins by the microbial community in the fermentation agent.

The temperature is measured in the first third of the shaft, wherein the cellulose is decomposing and nitrogen is being used, so the temperature has to be measured in first 24 hours, preferably in the first 16 hours, to check whether reactions have initiated. If the temperature is around 40 °C, the process is suitable. In case the reactions have not commenced and the temperature is lower, anaerobic processes take place, which is not wanted. Therefore, fresh fermentation agent and wood chips, if necessary, are added. Later, the temperature may be measured in the third phase, wherein the temperature has to be at least 70 °C, which indicates that the thermophilic phase is suitably active and the cellulose is being decomposed.

The pH is usually measured only at the second end of the fermentation shaft, but it can also be measured at the first end of the fermentation shaft to confirm the acid phase.

Due to the continuous process for the production of the organic fertilizer, the measurements are performed every day or every second to third day, wherein after performed mixing the measurements are usually performed the next day or after few hours.

The invention also relates to the organic fertilizer obtained with the process described above, wherein the fertilizer comprises humates made from humic acid during the process, wherein the content of humus in the final organic fertilizer is between 25 and 45%, preferably between 30 and 35%. A characteristic of the so-prepared fertilizer is that the pH of the fertilizer is in the range from 7 to 7.5. An advantage of neutral pH is in that its use is wide and universal regardless of the plant type or purpose of cultivation. Commonly used fertilizers have a basic pH, which consequently leads to limitations in use, adjustment, mixing, etc.

The organic fertilizer according to the present invention may be combined with any additional components during the process or in the last step of the process. In case mineral fertilizers are used as an additional component, but in limited concentrations under 5% (w/w), the fertilizer comprises organic-mineral complexes, while still maintaining a neutral pH of the fertilizer. By adding different components various fertilizers may be produced based on desired use. As a non-limiting example, a possible additional component is clay, which ensure ionic exchange.

The organic fertilizer obtained with the process and the system according to the invention may be used for all types of plants, in agriculture, flower cultivation or gardening.

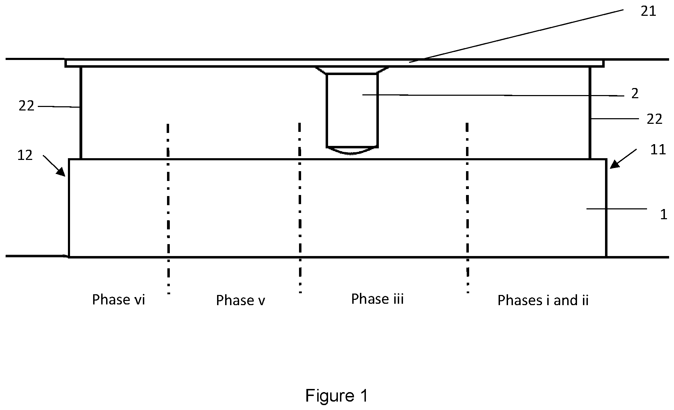

The invention will be further described based on an exemplary embodiment and figure 1, which shows a schematic view of the system according to the invention with indicated phases of the process for preparation of the fertilizer.

The process for continuous production of organic fertilizer according to a preferred embodiment comprises two steps:
a) providing fermentation agent comprising a mixture of fruit pomace and a microbial consortium comprising at least fungi, actinomycetes, thermophilic microorganisms and acidophilic bacteria,
b) preparing the organic fertilizer by mixing the fermentation agent and raw materials, wherein this step comprises the following sub-steps:
   i. adding at least one raw material, which is manure of from laying hens, manure from chicken farms or manure from pig farms, and the fermentation agent in ratio 3:1, into the fermentation shaft, wherein optionally any other additional material may be added, such as sludge from sewage treatment plants that do not contain heavy metals or hazardous substances, residues from biogas plants, products from municipal composting plants, olive pomace, pumpkin pomace, hop pomace and similar residues or waste, followed by mixing of materials and fermentation agent in the fermentation shaft,
   ii. activation of acidophilic bacteria in the fermentation agent, when the fat and then proteins in the raw material are beginning to be decomposed, and an increase in temperature to approximately 40 C°, wherein moisture up to 65% is maintained, wherein this phase lasts for 7 to 10 days with mixing every 1 to 3 days, wherein ammonium concentration may be followed and if necessary, materials with carbon can be added, such as fresh fermentation agent or additional raw material, wherein a C/N ratio around 1/30 is preferred,
   iii. decomposition of cellulose, wherein increase in temperature above 60 °C is detected, preferably above 70 °C, due to inactivation of acidophilic bacterial as saccharides from raw materials have been used as well as due to activation of thermophilic microorganisms due to increased temperature,
   iv. mixing every 1 to 3 days, so that addition of oxygen during mixing maintains high temperature around 70-80 °C for at least one week, preferably for 20 to 30 days in the part of fermentation shaft where cellulose is decomposed, so that all materials are processed into fertilizer,
   v. mineralization and formation of humates from humic acids formed in previous phases, wherein optionally nitrogen, phosphorus and/or potassium for formation of organic-mineral complexes are added, wherein in this phase the temperature decreases under 40 °C and moisture content is kept at 30 to 40%,
   vi. temperature decrease to the room temperature level or the environmental temperature, which indicates that the process of the production of fertilizer is finished,
wherein addition of raw materials or a mixture of raw materials and fermentation agent is done at the first end of the fermentation shaft, and wherein due to mixing the entire mass is moving towards the second end of the fermentation shaft, where final fertilizer with humates is present, and fresh raw materials and fermentation agent may be added at the first end. The amount of added fresh raw materials and fermentation agent is the same as the amount of fertilizer packaged from the second end of the fermentation shaft.

A system for continuous production of organic fertilizer, which allows execution of the process is shown in figure 1, wherein the system comprises:
- depot of incoming material (not shown),
- pomace depot (not shown), where the process for preparation of fermentation agent is performed,
- at least one building with at least one fermentation shaft 1 for performing the second step of the process according to any of the preceding claims, wherein the building comprises:
   ∘ at least one fermentation shaft 1, which has a first end 11 and a second end 12, wherein fresh manure and the fermentation agent is added to the first end 11 and the prepared fertilizer is packaged at the second end 12,
   ∘ a mixing device 2 arranged to mix the contents in at least one fermentation shaft 1,
   ∘ measuring equipment (not shown) comprising at least:
      ▪ at least one pH measuring device,
      ▪ at least one device for measuring ammonia concentration,
      ▪ at least one device for measuring temperature, and
      ▪ at least one device for measuring humidity,
wherein the measuring equipment is preferably hand held and are used in different phases of the process, wherein measurements are performed 10 to 15 cm below the upper surface of the material in the fermentation shaft.

The measurements are performed as described above.

The organic fertilizer obtained with the said process comprises humates produced from humic acids, which are formed during the process, wherein the contents of humus in the final fertilizer is between 30 and 35%. A characteristic of the obtained fertilizer is that the pH is in the range between 7 and 7.5.

The organic fertilizer according to the preferred embodiment was used in different cultivation processes, including cultivation of flowers, industrial plants, vegetables, and similar plants. The use of the invention is thus universal.

The organic fertilizer has been used in tests on cucumbers and peppers, which will be shown in tables below. As visible from the below tables, the product weight and product generation per plant has been higher with the use of the fertilizer according to the invention, while the number of plants and the cultivation area were the same. This is valid for cucumbers as well as peppers.

**Table 1: Results for cultivation of cucumbers, wherein commercially available fertilizer and the fertilizer according to the invention have been used**

| Fertilizer | Area (m²) | Number of plants | Product weight (kg) | Product/plant (kg/plant) |
|---|---|---|---|---|
| According to the invention | 67 | 200 | 880 | 4.40 |
| Commercially available | 67 | 200 | 710 | 3.55 |

**Table 2: Results for cultivation of peppers, wherein commercially available fertilizer and the fertilizer according to the invention have been used**

| Fertilizer | Area (m²) | Number of plants | Product weight (kg) | Product/plant (kg/plant) |
|---|---|---|---|---|
| According to the invention | 67 | 400 | 492 | 1.23 |
| Commercially available | 67 | 400 | 380 | 0.95 |

## Claims

1. A process for continuous production of organic fertilizer, which comprises the following steps:
a) preparing or providing a fermentation agent, which comprises inoculation of fruit pomace with a microbial consortium comprising at least fungi, actinomycetes, thermophilic microorganisms and acidophilic bacteria, and
b) preparing the organic fertilizer by mixing the fermentation agent and raw materials, wherein this step comprises the following sub-steps:
i. adding at least one raw material and the fermentation agent in ratio from 2:1 to 5:1, preferably 3:1, into the fermentation shaft, wherein optionally any other additional material may be added, followed by mixing of materials and fermentation agent in the fermentation shaft,
ii. activation of acidophilic bacteria in the fermentation agent, when the fat and then proteins in the raw material are beginning to be decomposed, and an increase in temperature to approximately 40 C°, wherein moisture up to 65% is maintained, wherein this phase lasts for 7 to 10 days with mixing every 1 to 3 days,
iii. decomposition of cellulose, wherein increase in temperature above 60 °C is detected, preferably above 70 °C, due to inactivation of acidophilic bacterial as saccharides from raw materials have been used as well as due to activation of thermophilic microorganisms due to increased temperature,
iv. mixing every 1 to 3 days, so that addition of oxygen during mixing maintains high temperature around 70-80 °C for at least one week, preferably for 20 to 30 days in the part of fermentation shaft where cellulose is decomposed,
v. mineralization and formation of humates from humic acids formed in previous phases, wherein in this phase the temperature decreases under 40 °C and moisture content is kept at 30 to 40%
vi. temperature decrease to the room temperature level or the environmental temperature, which indicates that the process of the production of fertilizer is finished,
wherein addition of raw materials or a mixture of raw materials and fermentation agent is done at the first end of the fermentation shaft, and wherein due to mixing the entire mass is moving towards the second end of the fermentation shaft, where final fertilizer with humates is present, and fresh raw materials and fermentation agent may be added at the first end.

2. The process according to claim 1, wherein the raw material is manure of from laying hens, manure from chicken farms or manure from pig farms.

3. The process according to claim 1 or 2, wherein as additional raw materials one or more of the following is added: sludge from sewage treatment plants that do not contain heavy metals or hazardous substances, residues from biogas plants, products from municipal composting plants, olive pomace, pumpkin pomace, hop pomace and similar residues or waste.

4. The process according to any of the preceding claim, wherein for production of fermentation agent grape pomace is used.

5. The process according to any of the preceding claim, wherein in step v) nitrogen, potassium and/or phosphorus is added, to allow formation of organic-mineral complexes.

6. The process according to any of the preceding claim, wherein in steps i) to iv) correction of the process may be performed in case one or more phases do not take place in suitable conditions, such as due to too high moisture, too low temperature, and similar, wherein in case of too high moisture components that bind water, such as wood chips, may be added, while in case of too low temperature fresh fermentation agent is added.

7. The process according to any of the preceding claim, wherein in any step or after the step vi) an additional component is added.

8. The process according to any of the preceding claim, wherein:
- ammonium concentration is measured manually with a probe in approximately the first sixth to the first quarter, usually in the first fifth of the fermentation shaft, and if necessary raw materials with carbon, i.e. additional fermentation agent or additional raw materials, are added, wherein a C/N ratio of around 1/30 is preferred,
- the temperature is measured in the first third of the shaft in first 24 hours, preferably in the first 16 hours, to check whether reactions have initiated, which is indicated by a temperature around 40 °C,
- temperature is measured in the third phase, wherein the temperature has to be at least 70 °C.
- pH is measured at the second end of the fermentation shaft,
- wherein measurements are performed every day or every second or third day, and wherein after mixing the measurements are performed the next day or after few hours.

9. A system for continuous production of organic fertilizer, which allows execution of the process according to any of the preceding claims, wherein the system comprises:
- depot of incoming material,
- pomace depot, where the process for preparation of fermentation agent is performed,
- at least one building with at least one fermentation shaft (1) for performing the second step of the process according to any of the preceding claims, wherein the building comprises:
∘ at least one fermentation shaft (1), which has a first end (11) and a second end (12), wherein fresh manure and the fermentation agent is added to the first end (11) and the prepared fertilizer is packaged at the second end (12),
∘ a mixing device (2) arranged to mix the contents in at least one fermentation shaft (1),
∘ measuring equipment comprising at least:
▪ at least one pH measuring device,
▪ at least one device for measuring ammonia concentration,
▪ at least one device for measuring temperature, and
▪ at least one device for measuring humidity,
∘ wherein the measuring equipment is preferably hand held and are used in different phases of the process, wherein measurements are performed 10 to 15 cm below the upper surface of the material in the fermentation shaft.

10. The organic fertilizer obtained with the process according to any claim from 1 to 8.

11. The organic fertilizer according to the preceding claim, **characterized in that** the pH of the fertilizer is between 7 and 7.5.

12. The organic fertilizer according to claim 10 or claim 11, further **characterized in that** it comprises humates formed from humic acids during the process.

13. The organic fertilizer according to any claim from 10 to 13, further **characterized in that** the humus content in the final fertilizer is between 25 and 45%, preferably between 30 and 35%.

14. The organic fertilizer according to any claim from 10 to 13, which comprises at least one additional component.

15. The organic fertilizer according to any claim from 10 to 14 for use in cultivation of all kinds of plants, in agriculture, plant cultivation or gardening.
